# EUROPEAN PATENT SPECIFICATION

(11) **EP 3 533 988 B1**
(45) Date of publication and mention of the grant of the patent: **02.06.2021**
(21) Application number: 19160126.9
(22) Date of filing: 28.02.2019
(51) Int. Cl.: F02K 3/04, F02C 6/08, F02C 7/18

(54) **INTERCOOLED COOLING AIR**
ZWISCHENGEKÜHLTE KÜHLLUFT
AIR DE REFROIDISSEMENT REFROIDI

(30) Priority: 28.02.2018 US 201815907942
(43) Date of publication of application: 04.09.2019
(73) Proprietor: Raytheon Technologies Corporation, Farmington, CT 06032 (US)
(72) Inventor: SNAPE, Nathan, Tolland, CT Connecticut 06084 (US); SUCIU, Gabriel L., Glastonbury, CT Connecticut 06033 (US); MERRY, Brian, Andover, CT Connecticut 06232 (US); CHANDLER, Jesse M., South Windsor, CT Connecticut 06074 (US); SCHWARZ, Frederick M., Glastonbury, CT Connecticut 06033 (US)
(74) Representative: Dehns

(56) References cited:
- EP-A1- 3 121 411
- US-A1- 2014 250 898
- US-A1- 2016 369 705

## Description

### BACKGROUND

This application relates to improvements in providing cooling air from a compressor section to a turbine section in a gas turbine engine.

Gas turbine engines are known and typically include a fan delivering air into a bypass duct as propulsion air. Further, the fan delivers air into a compressor section where it is compressed. The compressed air passes into a combustion section where it is mixed with fuel and ignited. Products of this combustion pass downstream over turbine rotors driving them to rotate.

It is known to provide cooling air from the compressor to the turbine section to lower the operating temperatures in the turbine section and improve overall engine operation. Typically, air from the high compressor discharge has been tapped, passed through a heat exchanger, which may sit in the bypass duct and then delivered into the turbine section. The air from the downstream most end of the compressor section is at elevated temperatures.

EP 3 121 411 A1 that is prior art against this EP application, discloses a gas turbine engine as set forth in the preamble of claim 1.

US 2014/250898 A1, that is prior art against this EP application, discloses bleed air systems for use with aircraft and related methods.

### SUMMARY

According to the present invention, there is provided a gas turbine engine as recited in claim 1.

In an embodiment according to the above, a mixer is provided downstream of the cooling compressor to receive air from a second tap to mix with the air downstream of the cooling compressor.

In another embodiment according to any of the above, air temperatures at the high pressure feed may be greater than or equal to 1350°F (732°C).

In another embodiment according to any of the above, the high pressure feed is connected to the compressor section, and connected into a line connected to the first tap, and at a location upstream of the heat exchanger, and the valve assembly selectively modulating between air in the first tap and high pressure feed being passed to the heat exchanger.

In another embodiment according to any of the above, the high pressure feed is connected to the compressor section and connected to a line downstream of the heat exchanger. The valve assembly modulates airflow from the first tap, downstream of the heat exchanger, and the high pressure feed, for being passed to the aircraft pneumatic system.

In another embodiment according to any of the above, the high pressure feed is downstream of the cooling compressor, and is connected to a line downstream of the heat exchanger. The valve assembly selectively modulates between air downstream of the heat exchanger, but not having passed through the cooling compressor, and air having passed through the cooling compressor for being delivered to the aircraft pneumatic system.

In another embodiment according to any of the above, the heat exchanger is positioned in a bypass duct between an outer fan housing an inner core housing.

In another embodiment according to any of the above, the heat exchanger is positioned within a pylon which selectively connects the gas turbine engine to an associated aircraft.

In another embodiment according to any of the above, the pylon having openings in an upstream end to allow air to pass across the heat exchanger to cool the heat exchanger.

In another embodiment according to any of the above, the heat exchanger is positioned in an upper bifurcation connecting the outer fan housing to the inner core housing.

In another embodiment according to any of the above, there are openings at an upstream end of the upper bifurcation to allow bypass duct to pass across the heat exchanger to cool the heat exchanger.

In another embodiment according to any of the above, the valve is a single valve.

In another embodiment according to any of the above, an air cycle machine is positioned between a line leading to the aircraft pneumatic system and an aircraft cabin.

These and other features may be best understood from the following drawings and specification.

### BRIEF DESCRIPTION OF THE DRAWINGS

Figure 1 schematically shows an embodiment of a gas turbine engine.
Figure 2 shows a prior art engine.
Figure 3 shows one example engine, which per se falls outside the wording of the claims.
Figure 4 is a graph illustrating increasing temperatures of a tapped air against the work required.
Figure 5 shows a detail of an example of an engine.
Figure 6 shows a further detail of the example engine of Figure 5.
Figure 7 schematically shows a further example, which per se falls outside the wording of the claims.
Figure 8 shows an embodiment.
Figure 9 shows another embodiment.
Figure 10 shows yet another embodiment.
Figure 11 shows a potential location for a heat exchanger.

### DETAILED DESCRIPTION

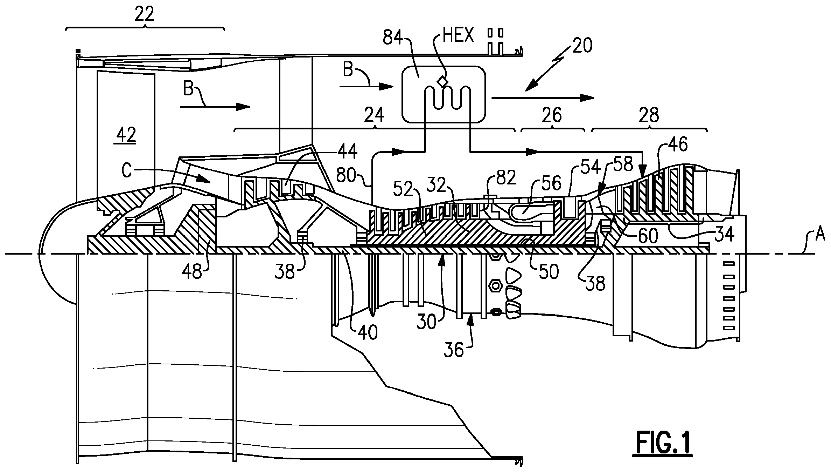

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six, with an example embodiment being greater than about ten. The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10,668 metres). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R)/(518.7°R)]^{0.5}(where °R = K x 9/5). The "Low corrected fan tip speed", as disclosed herein according to one non-limiting embodiment, is less than about 1150 ft/second (350.5 m/s).

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

Gas turbine engines designs are seeking to increase overall efficiency by generating higher overall pressure ratios. By achieving higher overall pressure ratios, increased levels of performance and efficiency may be achieved. However, challenges are raised in that the parts and components associated with a high pressure turbine require additional cooling air as the overall pressure ratio increases.

The example engine 20 utilizes air bleed 80 from an upstream portion of the compressor section 24 for use in cooling portions of the turbine section 28. The air bleed is from a location upstream of the discharge 82 of the compressor section 24. The bleed air passes through a heat exchanger 84 to further cool the cooling air provided to the turbine section 28. The air passing through heat exchanger 84 is cooled by the bypass air B. That is, heat exchanger 84 is positioned in the path of bypass air B.

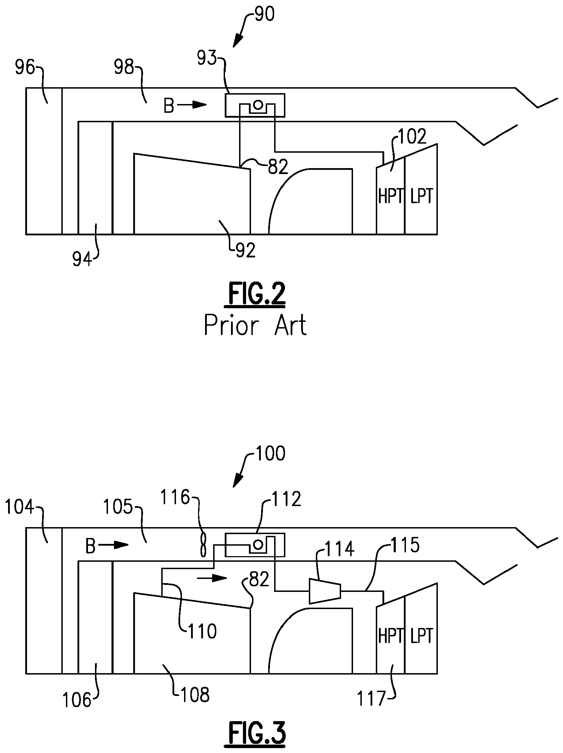

A prior art approach to providing cooling air is illustrated in Figure 2. An engine 90 incorporates a high pressure compressor 92 downstream of the low pressure compressor 94. As known, a fan 96 delivers air into a bypass duct 98 and into the low pressure compressor 94. A downstream most point, or discharge 82 of the high pressure compressor 92 provides bleed air into a heat exchanger 93. The heat exchanger is in the path of the bypass air in bypass duct 98, and is cooled. This high pressure high temperature air from location 82 is delivered into a high pressure turbine 102.

The downstream most point 82 of the high pressure compressor 82 is known as station 3. The temperature T3 and pressure P3 are both very high.

In future engines, T3 levels are expected to approach greater than or equal to 1350°F (732°C). Current heat exchanger technology is becoming a limiting factor as they are made of materials, manufacturing, and design capability which have difficulty receiving such high temperature and pressure levels.

Figure 3 shows an engine 100 falling outside the wording of the claims. A fan 104 may deliver air B into a bypass duct 105 and into a low pressure compressor 106. High pressure compressor 108 is positioned downstream of the low pressure compressor 106. A bleed 110 taps air from a location upstream of the downstream most end 82 of the high pressure compressor 108. This air is at temperatures and pressures which are much lower than T3/P3. The air tapped at 110 passes through a heat exchanger 112 which sits in the bypass duct 105 receiving air B. Further, the air from the heat exchanger 112 passes through a compressor 114, and then into a conduit 115 leading to a high pressure turbine 117. This structure is all shown schematically.

Since the air tapped at point 110 is at much lower pressures and temperatures than the Figure 2 prior art, currently available heat exchanger materials and technology may be utilized. This air is then compressed by compressor 114 to a higher pressure level such that it will be able to flow into the high pressure turbine 117.

An auxiliary fan 116 may be positioned upstream of the heat exchanger 112 as illustrated. The main fan 104 may not provide sufficient pressure to drive sufficient air across the heat exchanger 112. The auxiliary fan will ensure there is adequate air flow in the circumferential location of the heat exchanger 112.

In one example, the auxiliary fan may be variable speed, with the speed of the fan varied to control the temperature of the air downstream of the heat exchanger 112. As an example, the speed of the auxiliary fan may be varied based upon the operating power of the overall engine.

While cooling of the turbine section is illustrated, it may be that the compressor section is cooled instead. In examples both are cooled. Generally, the disclosure extends to cooling at least one rotating component.

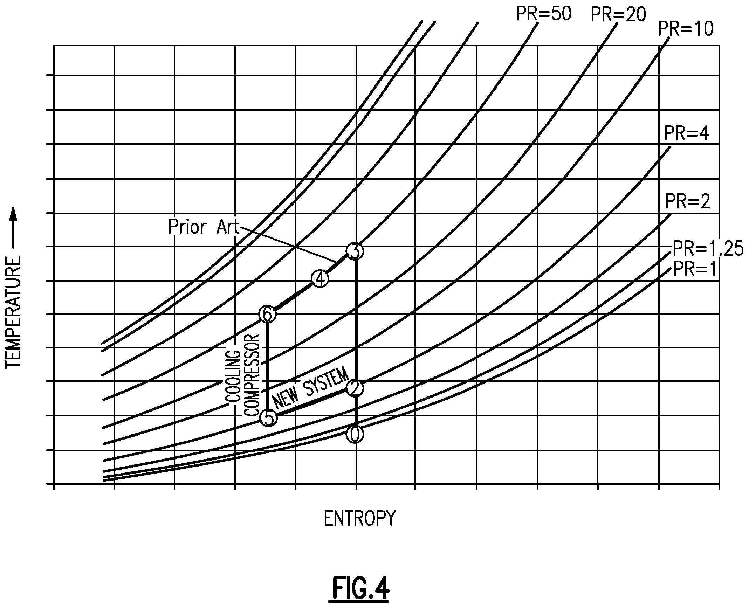

Referring to Figure 4, a temperature/entropy diagram illustrates that a lower level of energy is spent to compress air of a lower temperature to the desired P3 pressure level. Cooler air requires less work to compress when compared to warmer air so the device is smaller and will be more efficient. Accordingly, the work required to raise the pressure of the air drawn from an early stage of the compressor section is less than if the air were compressed to the desired pressure within the compressor section. Therefore, high pressure air at P3 levels equivalent, or higher, than the main compressor can be obtained at significantly lower temperatures than T3. As shown in Figure 4, to reach a particular pressure ratio, 50 for example, the prior system would move from point 2 to point 3, with a dramatic increase in temperature. However, the disclosed or new system moves from point 2 to point 5 through the heat exchanger, and the cooling compressor then compresses the air up to point 6. As can be appreciated, point 6 is at a much lower temperature.

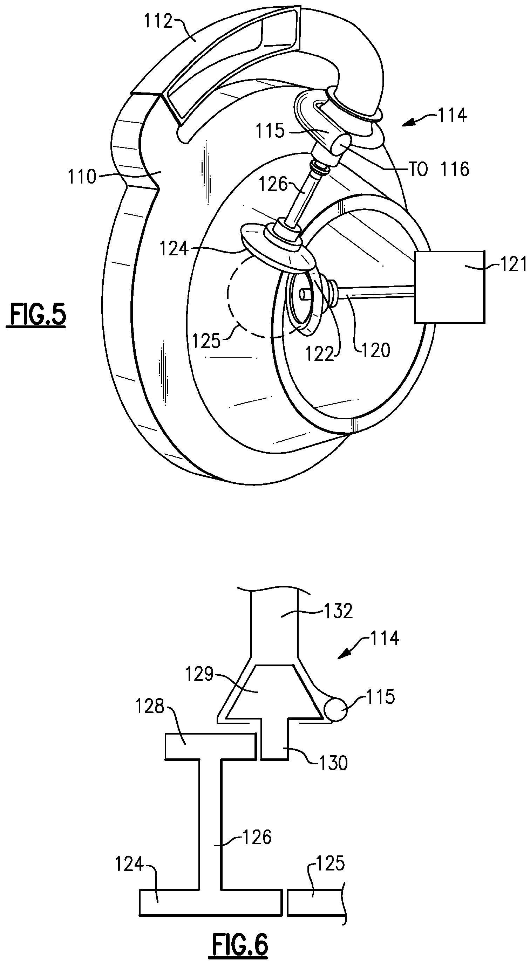

Figure 5 shows a detail of compressor 114 having an outlet into conduit 115. In one embodiment, a primary tower shaft 120 drives an accessory gearbox 121 in order to take power off of a main engine shaft. The shaft 126 drives a compressor rotor within the cooling compressor 114. The shafts 120 and 126 may be driven by a bull gear 125 driven by a turbine rotor, and in one example, with a high pressure compressor rotor.

Figure 6 shows an example wherein a gear 128 is driven by the shaft 126 to, in turn, drive a gear 130 which drives a compressor impeller 129. An input 132 to the compressor impeller 129 supplies the air from the tap 110. The air is compressed and delivered into the outlet conduit 115. The interacting gears in Figure 6 depict schematically that the cooling compressor's speed is much higher than the bull gear's speed, which is equivalent to the main engine's shaft speed. In embodiments this speed increase is at least two times and up to ten times. In one embodiment the cooling compressor's speed is six times that of the highest main engine shaft speed.

Details of the engine, as set forth above, may be found in co-pending U.S. Patent Application Serial No. 14/695,578.

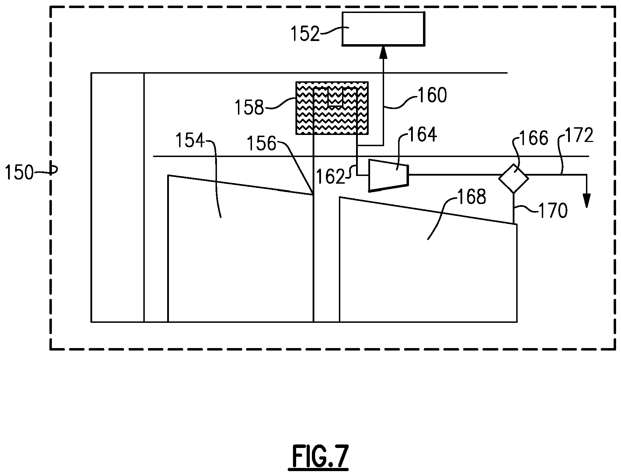

As shown in Figure 7, which per se falls outside the wording of the claims, an example uses the same heat exchanger for two purposes: for cooling at least the turbine section and supplying an aircraft environmental control system. An aircraft 150 has an aircraft cabin 152 which must be supplied by air. As known, a lower pressure compressor 154 has air tapped 156 (as above) and passed through a heat exchanger 158. In this example, the heat exchanger 158 is an existing aircraft pre-cooler which is currently used on engines to receive compressor bleed air, and cool it down to less than 450°F (232°C). This air is then delivered to the cabin environmental control system 152. In one scenario, the aircraft is on the ground and ready for takeoff; the flow to the system designated 152 is not large owing to the fact that the aircraft needs some ventilation but no pressurization at this point and the flow from the heat exchanger is primarily to the turbine at this point. Later, when the aircraft requires more air conditioning flow and/or cabin pressurization the proportion of the flow going to the airframe may increase.

Note, that the air actually passes into an aircraft pneumatic system. Some of the air does pass to the aircraft cabin, but some also goes for wing anti-icing and pressurizing cargo areas, etc. Thus, for purposes of the claims, it will be noted that the air is delivered to an aircraft pneumatic system.

Air 160 downstream of the heat exchanger 158 travels to the aircraft cabin 152. Another branch 162 downstream of the heat exchanger 158 passes to the cooling compressor 164. Cooling compressor 164 may deliver air into a mixer 166 which receives air from a higher pressure compressor 168 at tap 170. This mixing is optional. Downstream of the mixer 166, the air is delivered at 172 to the turbine (again, similar to that disclosed above).

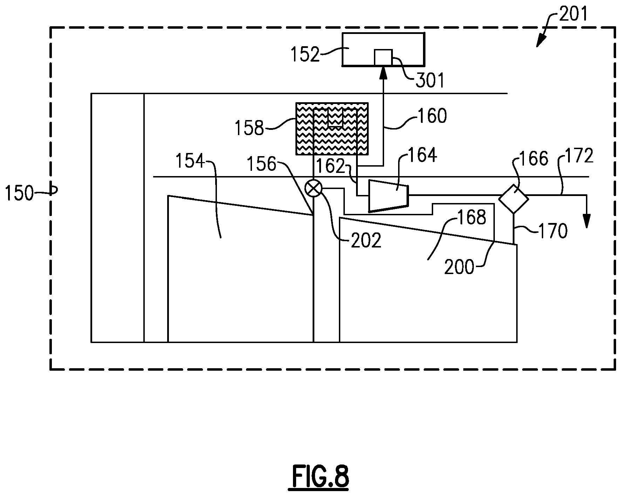

As has been mentioned, the above examples are shown somewhat schematically. Figure 8 shows an embodiment 201 of the present invention wherein a second tap 200 is taken from a higher pressure location than 156, perhaps within the high pressure compressor 168. A valve 202 can modulate the flow between tap 156 and tap 200 to heat exchanger 158. It should be noted that tap 200 could be at an even higher pressure location.

The tap 156 is preferably utilized during high power operation, such as takeoff and climb, while the air from tap 200 can be utilized when the engine 201 is at ground idle, flight idle, or other fairly low power conditions.

As an example, should one engine need to be shut down at high altitude and the engine 201 is still operating, the tap 200 could be used to provide for cabin pressurization. Further, if the aircraft is at a service ceiling, then the tap 200 may be utilized to provide the necessary cabin pressure, even though both engines are operating. A controller for the valve 202 is programmed to achieve these selections. In addition, the tap 200 can be high pressure compressor discharge static pressure, or from the diffuser case around the combustor. Generically, all of these locations could be referred to as a tap location higher than the more upstream location where the tap 156 is taken.

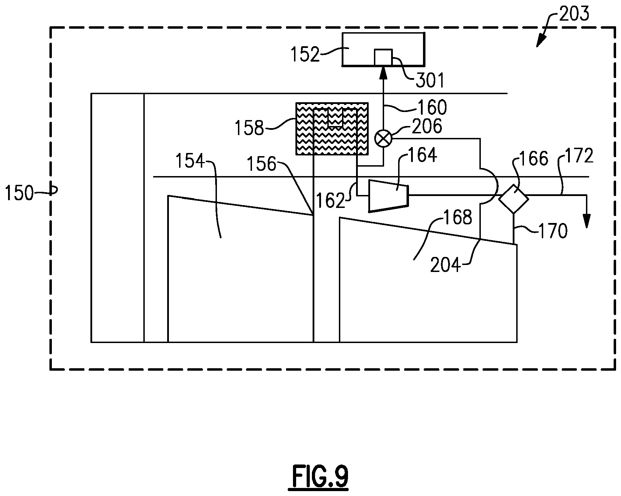

Figure 9 shows another embodiment 203. In this embodiment, the tap 204 may be taken from any location as mentioned above with regard to the tap 200. However, the tap 204 here bypasses the heat exchanger 158 if certain conditions can be met by the selection, namely that the consideration of the entire envelope of the engine and aircraft's operation and the operation of the selection valve are such that the bleed temperature never exceeds a predetermined temperature (say about 425 degrees Fahrenheit (218°C)) to keep hot air out of wing. There may be other considerations with a different temperature limit such as the structural allowable temperatures of a wing component, say as an organic matrix composite material. Instead, the tap 204 communicates with a valve 206 which selects between the air delivered from the heat exchanger 158 and tap 204, to be sent to the aircraft cabin 152. Again, the valve 206, and its associated control, will predominantly utilize air from tap 156 at higher power operation, and predominantly air from the tap 204 at lower power operation.

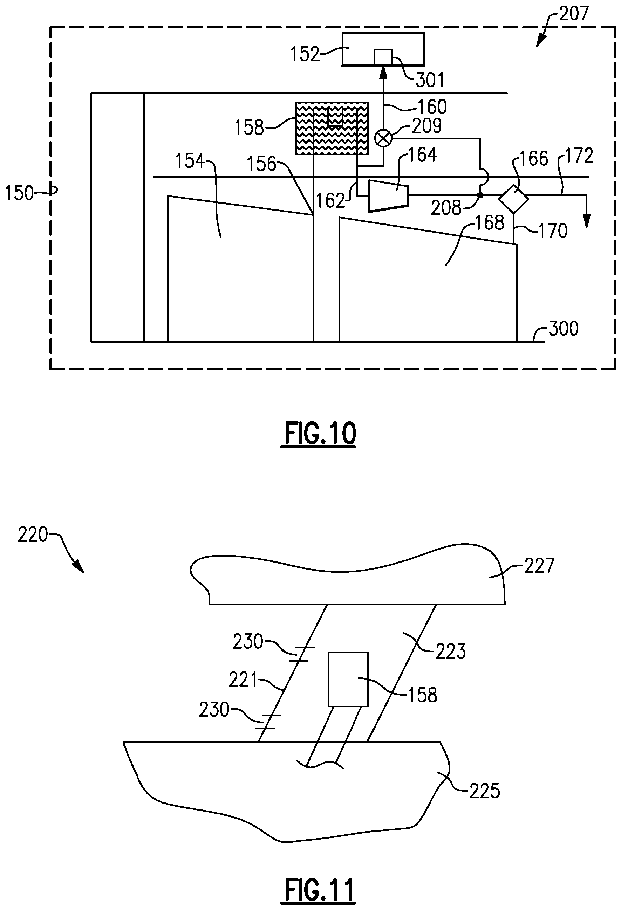

Figure 10 shows another embodiment 207. Here, a higher pressure tap 208 is taken from a location downstream of the cooling compressor 164, and passes to a valve 209. Valve 209 is controlled to select between the air from tap 156, downstream of the heat exchanger 158, and air from the tap 208.

This embodiment may be utilized should a designer determine that it would be beneficial to set the outlet pressure of the cooling compressor to be higher than the source 200 or 204 from the above embodiment. One example of such desirable scenario would where the aircraft service ceiling is at a very high altitude, say 45,000 ft (13.7 km), that is above a more conventional altitude of say, 42,000 ft (12.8 km) for an operational advantage involving passing around thunderstorms and the need to find smoother air for passenger safety and comfort that is commonly referred to as "clear air turbulence". Here if it is determined that the main engine's compressor is inadequate to support safe operation at the increased altitude when the designer considers multiple engine and environment control system failure occurrences such as engine-out flight with a twin engine aircraft where the remaining engine is set at idle to initiate an emergency descent.

The valve assemblies shown in Figures 8-10 could be single valves or dual valves. If dual, the valve on the lower pressure line could be a check valve, with the other line receiving a controlled valve. Alternatively, both valves could be controlled.

Figure 11 relates to the location of the heat exchanger 158. The heat exchanger 158 in all embodiments may be located vertically above an engine rotational center line 300 (see Figure 10). This facilitates service.

In the specific embodiment 220 illustrated in Figure 11, the heat exchanger 158 is located in one of an upper bifurcation or pylon 223 which selectively connects a radially inner member 225 to a radially outer member 227 of the engine's nacelle. In one embodiment, the outer member 227 may be the aircraft outer barrel surrounding the fan duct, the element 223 may be a pylon, and the element 225 may be the inner barrel surround the core of the engine. In another embodiment, the inner element 222 may be an inner core housing, the element 223 may be an upper bifurcation, and the outer element 227 may be an outer fan housing.

At any rate, a leading edge 221 of the element 223 has openings shown schematically at 230 to allow cooling air to pass over the heat exchanger 158.

Overall these systems are large in size and packaging can be challenging such that it may be desirable to located the cooling compressor on the accessory gearbox as was described earlier and to place the heat exchanger somewhat above the engine horizontal centerline such that the fan air can enter the heat and the plumbing to the aircraft environmental control system can exit directly up through the upper bifurcation and enter the wing without taking up an inordinate amount of the limited space in the core cowling

In all of these embodiments, it should be understood that the "aircraft cabin" 152 is actually a much more complicated system and might contain an air cycle machine 301, as illustrated, and other associated systems.

By utilizing the existing heat exchanger 158, a separate heat exchanger is not required to provide the inter-cooled air. This may require that the existing aircraft pre-cooler or heat exchanger be slightly upsized. However, the combination would eliminate the requirement of an additional heat exchanger, and provide freedom with regard to packaging, and reduction of both weight and cost.

A gas turbine engine could be said to include a plurality of rotating components (52 and/or 54) housed within a compressor section and a turbine section. A first tap 156 connected to the compressor section and configured to deliver air at a first pressure. A heat exchanger 158 is connected downstream of the first tap and configured to deliver air 160 to an aircraft fuselage. A cooling compressor 164 is connected downstream of the heat exchanger. A high pressure feed (200/204/208) is configured to deliver air at a second pressure which is higher than the first pressure. The cooling compressor is configured to deliver air to at least one of the plurality of rotating components. A valve assembly (202/206/209) can select whether air from the first tap or air from the high pressure feed is delivered to the aircraft pneumatic system.

In the embodiment of Figure 8 the high pressure feed is the air downstream of tap 200, and the valve is valve 202. In the embodiment of Figure 9 the high pressure feed is the air downstream of the tap 204, and the valve is valve 206. In the embodiment of Figure 10 the high pressure feed is downstream of the tap 208, and the valve is valve 209.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A gas turbine engine (20; 201; 203; 207) comprising:
a plurality of rotating components housed within a compressor section (24) and a turbine section (28);
a first tap (156) connected to said compressor section (24) and configured to deliver air at a first pressure;
a heat exchanger (158) connected downstream of said first tap (156) and configured to deliver air (160) to an aircraft fuselage (152) via a first branch (160); and
a cooling compressor (164) connected downstream of said heat exchanger (158) via a second branch (162) that receives air from the heat exchanger (84), wherein said cooling compressor (164) is configured to deliver air to at least one of said plurality of rotating components,
**characterised in that** the gas turbine engine further comprises:
a high pressure feed (200; 204; 208) configured to deliver air at a second pressure which is higher than said first pressure; and
a valve assembly (202; 206; 209) that can select whether air from said first tap (156) or air from said high pressure feed (200; 204; 208) is delivered to the aircraft fuselage (152).

2. The gas turbine engine as set forth in claim 1, wherein a mixer (166) is provided downstream of said cooling compressor (164) to receive air from a second tap (170) to mix with the air downstream of the cooling compressor (164).

3. The gas turbine engine as set forth in claim 1 or 2, wherein air temperatures at said high pressure feed (200; 204; 208) may be greater than or equal to 1350°F (732°C).

4. The gas turbine engine as set forth in any preceding claim, wherein said high pressure feed (200) is connected to said compressor section (24), and connected into a line connected to said first tap (156), and at a location upstream of said heat exchanger (158), and said valve assembly (202) selectively modulating between air in said first tap (156) and high pressure feed (200) being passed to said heat exchanger (158).

5. The gas turbine engine as set forth in any of claims 1 to 3, wherein said high pressure feed (204) is connected to said compressor section (24) and connected to a line downstream of said heat exchanger (158), and said valve assembly (206) modulating airflow from said first tap (156), downstream of said heat exchanger (158), and said high pressure feed (204), for being passed to the aircraft fuselage (152).

6. The gas turbine engine as set forth in any of claims 1 to 3, wherein said high pressure feed (208) is downstream of said cooling compressor (164), and is connected to a line downstream of said heat exchanger (158), and said valve assembly (209) selectively modulating between air downstream of said heat exchanger (158), but not having passed through said cooling compressor (164), and air having passed through said cooling compressor (164) for being delivered to the aircraft fuselage (152).

7. The gas turbine engine as set forth in any preceding claim, wherein said heat exchanger (158) is positioned in a bypass duct (105) between an outer fan housing (227) and an inner core housing (225).

8. The gas turbine engine as set forth in any of claims 1 to 6, wherein said heat exchanger (158) is positioned within a pylon (223) configured to connect the gas turbine engine to an aircraft (150).

9. The gas turbine engine as set forth in claim 8, wherein said pylon (223) has openings (230) in an upstream end (221) to allow air to pass across said heat exchanger (158) to cool said heat exchanger (158).

10. The gas turbine engine as set forth in any of claims 1 to 6, wherein said heat exchanger (158) is positioned in an upper bifurcation (223) connecting an outer fan housing (227) to an inner core housing (225).

11. The gas turbine engine as set forth in claim 10, wherein there are openings (230) at an upstream end (221) of said upper bifurcation (223) to allow bypass air to pass across the heat exchanger to cool the heat exchanger.

12. The gas turbine engine as set forth in any preceding claim, wherein said valve assembly (200; 204; 208) is a single valve (200; 204; 208).

## Patentansprüche

1. Gasturbinentriebwerk (20; 201; 203; 207), umfassend:
eine Vielzahl von drehenden Komponenten, welche in einem Kompressorabschnitt (24) und einem Turbinenabschnitt (28) beherbergt sind;
einen ersten Hahn (156), welcher mit dem Kompressorabschnitt (24) verbunden ist und dazu konfiguriert ist, Luft bei einem ersten Druck zu liefern;
einen Wärmetauscher (158), welcher stromabwärts des ersten Hahns (156) verbunden ist und dazu konfiguriert ist, Luft (160) über eine erste Abzweigung (160) an einen Flugzeugrumpf (152) zu liefern; und
einen Kühlkompressor (164), welcher stromabwärts des Wärmetauschers (158) über eine zweite Abzweigung (162) verbunden ist, welcher Luft von dem Wärmetauscher (84) aufnimmt, wobei der Kühlkompressor (164) dazu konfiguriert ist, Luft an mindestens eine der Vielzahl von drehenden Komponenten zu liefern,
**dadurch gekennzeichnet, dass** das Gasturbinentriebwerk ferner Folgendes umfasst:
eine Hochdruckzuführung (200; 204; 208), welche dazu konfiguriert ist, Luft bei einem zweiten Druck zu liefern, welcher höher als der erste Druck ist; und
eine Ventilanordnung (202; 206; 209), welche auswählen kann, ob Luft von dem ersten Hahn (156) oder Luft von der Hochdruckzuführung (200; 204; 208) an den Flugzeugrumpf (152) geliefert wird.

2. Gasturbinentriebwerk nach Anspruch 1, wobei ein Mischer (166) stromabwärts des Kühlkompressors (164) bereitgestellt ist, um Luft von einem zweiten Hahn (170) aufzunehmen, um diese mit der Luft stromabwärts des Kühlkompressors (164) zu mischen.

3. Gasturbinentriebwerk nach Anspruch 1 oder 2, wobei Lufttemperaturen an der Hochdruckzuführung (200; 204; 208) höher oder gleich 1350 °F (732 °C) sein können.

4. Gasturbinentriebwerk nach einem der vorstehenden Ansprüche, wobei die Hochdruckzuführung (200) mit dem Kompressorabschnitt (24) verbunden ist und in eine Leitung, die mit dem ersten Hahn (156) verbunden ist, und an einem Ort stromaufwärts des Wärmetauschers (158) verbunden ist, und wobei die Ventilanordnung (202) selektiv zwischen Luft in dem ersten Hahn (156) und der Hochdruckzuführung (200) moduliert, welche an den Wärmetauscher (158) geführt wird.

5. Gasturbinentriebwerk nach einem der Ansprüche 1 bis 3, wobei die Hochdruckzuführung (204) mit dem Kompressorabschnitt (24) verbunden ist und mit einer Leitung stromabwärts des Wärmetauschers (158) verbunden ist, und wobei die Ventilanordnung (206) einen Luftstrom von dem ersten Hahn (156) stromabwärts des Wärmetauschers (158) und der Hochdruckzuführung (204) moduliert, um an den Flugzeugrumpf (152) geführt zu werden.

6. Gasturbinentriebwerk nach einem der Ansprüche 1 bis 3, wobei die Hochdruckzuführung (208) stromabwärts des Kühlkompressors (164) ist, und mit einer Leitung stromabwärts des Wärmetauschers (158) verbunden ist, und wobei die Ventilanordnung (209) selektiv zwischen Luft stromabwärts des Wärmetauschers (158), welche nicht durch den Kühlkompressor (164) geführt wurde, und Luft zu modulieren, welche durch den Kühlkompressor (164) geführt wurde, um an den Flugzeugrumpf (152)) geliefert zu werden.

7. Gasturbinentriebwerk nach einem der vorstehenden Ansprüche, wobei der Wärmetauscher (158) in einem Umgehungskanal (105) zwischen einem äußeren Fan-Gehäuse (227) und einem inneren Kerngehäuse (225) positioniert ist.

8. Gasturbinentriebwerk nach einem der Ansprüche 1 bis 6, wobei der Wärmetauscher (158) in einem Pylonen (223) positioniert ist, welcher dazu konfiguriert ist, das Gasturbinentriebwerk mit einem Flugzeug (150) zu verbinden.

9. Gasturbinentriebwerk nach Anspruch 8, wobei der Pylon (223) Öffnungen (230) in einem stromaufwärtigen Ende (221) aufweist, um zu ermöglichen, dass Luft durch den Wärmetauscher (158) geführt wird, um den Wärmetauscher (158) zu kühlen.

10. Gasturbinentriebwerk nach einem der Ansprüche 1 bis 6, wobei der Wärmetauscher (158) in einer oberen Gabelung (223) positioniert ist, welche ein äußeres Fan-Gehäuse (227) mit einem inneren Kerngehäuse (225) verbindet.

11. Gasturbinentriebwerk nach Anspruch 10, wobei an einem stromaufwärtigen Ende (221) der oberen Gabelung (223) Öffnungen (230)vorhanden sind, um zu ermöglichen, dass Umgehungsluft durch den Wärmetauscher geführt wird, um den Wärmetauscher zu kühlen.

12. Gasturbinentriebwerk nach einem der vorstehenden Ansprüche, wobei die Ventilanordnung (200; 204; 208) ein einzelnes Ventil (200; 204; 208) ist.

## Revendications

1. Moteur à turbine à gaz (20 ; 201 ; 203; 207), comprenant :
une pluralité de composants rotatifs logés dans une section de compresseur (24) et une section de turbine (28) ;
un premier robinet (156) connecté à ladite section de compresseur (24) et conçu pour fournir de l'air à une première pression ;
un échangeur de chaleur (158) connecté en aval dudit premier robinet (156) et conçu pour fournir de l'air (160) à un fuselage d'aéronef (152) par le biais d'une première branche (160) ; et
un compresseur de refroidissement (164) connecté en aval dudit échangeur de chaleur (158) par le biais d'une seconde branche (162) qui reçoit de l'air de l'échangeur de chaleur (84), dans lequel ledit compresseur de refroidissement (164) est conçu pour fournir de l'air à au moins l'un de ladite pluralité de composants rotatifs,
**caractérisé en ce que** le moteur à turbine à gaz comprend en outre :
une alimentation haute pression (200 ; 204 ; 208) conçue pour fournir de l'air à une seconde pression qui est supérieure à ladite première pression ; et
un ensemble soupape (202 ; 206 ; 209) qui peut sélectionner si l'air provenant dudit premier robinet (156) ou l'air provenant de ladite alimentation haute pression (200 ; 204 ; 208) est fourni au fuselage d'aéronef (152).

2. Moteur à turbine à gaz selon la revendication 1, dans lequel un mélangeur (166) est prévu en aval dudit compresseur de refroidissement (164) pour recevoir l'air d'un second robinet (170) pour le mélanger avec l'air en aval du compresseur de refroidissement (164).

3. Moteur à turbine à gaz selon la revendication 1 ou 2, dans lequel les températures de l'air à ladite alimentation haute pression (200 ; 204 ; 208) peuvent être supérieures ou égales à 1350 °F (732 °C).

4. Moteur à turbine à gaz selon une quelconque revendication précédente, dans lequel ladite alimentation haute pression (200) est connectée à ladite section de compresseur (24), et connectée à une conduite connectée audit premier robinet (156), et à un emplacement en amont dudit échangeur de chaleur (158) et ledit ensemble soupape (202) modulant sélectivement entre l'air dans ledit premier robinet (156) et l'alimentation haute pression (200) étant acheminé vers ledit échangeur de chaleur (158).

5. Moteur à turbine à gaz selon l'une quelconque des revendications 1 à 3, dans lequel ladite alimentation haute pression (204) est connectée à ladite section de compresseur (24) et connectée à une conduite en aval dudit échangeur de chaleur (158), et ledit ensemble soupape (206) modulant le flux d'air provenant dudit premier robinet (156), en aval dudit échangeur de chaleur (158), et de ladite alimentation haute pression (204), pour être acheminé vers le fuselage d'aéronef (152) .

6. Moteur à turbine à gaz selon l'une quelconque des revendications 1 à 3, dans lequel ladite alimentation haute pression (208) est en aval dudit compresseur de refroidissement (164), et est connectée à une conduite en aval dudit échangeur de chaleur (158), et ledit ensemble soupape (209) modulant sélectivement entre l'air en aval dudit échangeur de chaleur (158), mais n'ayant pas traversé ledit compresseur de refroidissement (164), et l'air ayant traversé ledit compresseur de refroidissement (164) pour être fourni au fuselage d'aéronef (152) .

7. Moteur à turbine à gaz selon une quelconque revendication précédente, dans lequel ledit échangeur de chaleur (158) est positionné dans un conduit de dérivation (105) entre un carter de soufflante externe (227) et un carter de noyau interne (225).

8. Moteur à turbine à gaz selon l'une quelconque des revendications 1 à 6, dans lequel ledit échangeur de chaleur (158) est positionné à l'intérieur d'un pylône (223) conçu pour connecter le moteur à turbine à gaz à un aéronef (150).

9. Moteur à turbine à gaz selon la revendication 8, dans lequel ledit pylône (223) a des ouvertures (230) dans une extrémité amont (221) pour permettre à l'air de traverser ledit échangeur de chaleur (158) pour refroidir ledit échangeur de chaleur (158) .

10. Moteur à turbine à gaz selon l'une quelconque des revendications 1 à 6, dans lequel ledit échangeur de chaleur (158) est positionné dans une bifurcation supérieure (223) connectant un carter de soufflante externe (227) à un carter de noyau interne (225).

11. Moteur à turbine à gaz selon la revendication 10, dans lequel il y a des ouvertures (230) à une extrémité amont (221) de ladite bifurcation supérieure (223) pour permettre à l'air de dérivation de traverser l'échangeur de chaleur pour refroidir l'échangeur de chaleur.

12. Moteur à turbine à gaz selon une quelconque revendication précédente, dans lequel ledit ensemble soupape (200 ; 204 ; 208) est une soupape unique (200 ; 204 ; 208).
